# FASCICULE DE BREVET EUROPEEN

(11) **EP 1 009 212 B1**
(45) Date de publication et mention de la délivrance du brevet: **13.08.2003**
(21) Numéro de dépôt: 98909240.8
(22) Date de dépôt: 18.03.1998
(51) Int. Cl.: A01D 34/68

(54) **AMELIORATIONS A UNE TONDEUSE ROBOTIQUE**
ROBOTER-MÄHER
IMPROVEMENTS TO SELF-PROPELLED LAWN MOWER

(30) Priorité: 18.03.1997 BE 9700237
(43) Date de publication de la demande: 21.06.2000
(73) Titulaire: Solar and Robotics S.A., 1050 Bruxelles (BE)
(72) Inventeur: COLENS, André, B-1330 Rixensart (BE)
(74) Mandataire: Colens, Alain
(86) Numéro de dépôt international: BE9800038
(87) Numéro de publication internationale: WO98041081

(56) Documents cités:
- WO-A-92/04817
- DE-A- 1 507 185
- DE-A- 1 934 442
- DE-A- 2 210 781
- DE-A- 3 816 622
- FR-A- 2 696 569
- GB-A- 2 230 414
- US-A- 3 073 409
- US-A- 3 924 389
- US-A- 4 887 415
- US-A- 5 007 234

## Description

La présente invention concerne des améliorations à une tondeuse à gazon autonome, plus particulièrement un procédé de fonctionnement d'une tondeuse à gazon robotique.

Selon un autre aspect de l'invention on propose une tondeuse robotique fonctionnant selon ledit procédé.

On connaît déjà des engins robotiques aptes à tondre une pelouse. Ainsi le document GB 2230414 décrit un engin de tonte robotique comportant un ordinateur apte à agir sur un système électronique de contrôle de l'avancement de l'engin.

Le document DE-A-3 816 622 décrit également un système basé sur un engin autonome, plus particulièrement une tondeuse, comprenant un fil situé à la périphérie d'une surface de travail dans laquelle ledit engin évolue.

Le brevet européen EP-A-0 550 473 propose une tondeuse robotique de faible puissance parcourant de manière quasi-permanente et aléatoire la surface à tondre qui peut être également déterminée par un fil posé ou enterré à la périphérie de cette surface.

Dans les deux dernier cas, le fil ne sert cependant pas également à déterminer un trajet particulier de l'engin.

On connaît, par le brevet européen EP-A-0 550 473 susmentionné, une première amélioration par rapport à un système purement aléatoire en utilisant la mesure de l'énergie absorbée par la tête de coupe pour déterminer si la machine se trouve dans une zone déjà tondue ou non. Ceci permet à la fois à la tondeuse d'ajuster sa vitesse de progression de manière à rester peu de temps dans une zone déjà tondue et d'autre part de modifier son comportement lors d'un passage dans une zone non tondue ( p.e. pour suivre alors une trajectoire de tonte en spirale).

La présente invention propose des améliorations supplémentaires à l'efficacité de tonte d'une tondeuse robotique, en particulier pour la tonte de grandes surfaces, par exemple pour les terrains de golf ou des surfaces de parc.

Selon un premier aspect de l'invention, on propose un procédé de guidage ou de fonctionnement d'une tondeuse robotique dans lequel :
- la tondeuse est positionnée le long d'un fil délimitant la périphérie de la surface à tondre,
- un ordinateur de bord reçoit périodiquement la mesure de l'amplitude d'un signal émis par le fil périphérique
- l'ordinateur envoie au système de contrôle les commandes pour faire évoluer la tondeuse à une distance constante dudit fil périphérique
- l'ordinateur évalue, sur la base de mesure de la distance, éventuellement associée à une mesure des changements de direction, le moment ou un tour complet a été effectué par la tondeuse le long du fil
- l'ordinateur commande alors un positionnement de la tondeuse à une distance dudit fil supérieure de la précédente, la différence étant égala ou inférieure à la largeur de coupe.

Un des désavantages liés aux engins de tonte conçus pour les grandes surfaces tels qu'actuellement utilisés, consiste en l'utilisation d'un système de coupe relativement puissant, la surface de la tête ou des têtes de coupe devant être plus importante que pour les tondeuses classiques à usage domestique. L'inertie du ou des disques ou lames de coupe est également plus importante. La sécurité d'utilisation de ces engins pose donc un problème, en particulier si un corps étranger entre accidentellement en contact avec la ou les têtes de coupe. Ce problème de sécurité se pose également, et même davantage, si l'on veut utiliser des engins de tonte robotiques pour les grandes surfaces.

Selon un deuxième aspect de l'invention, on propose une tondeuse robotique ne présentant pas ou réduisant fortement cet inconvénient, et appliquant le procédé de guidage susmentionné.

Il existe fondamentalement deux techniques de base pour définir le parcours d'un robot autonome mobile, p.e. un robot pour la tonte du gazon :
- une technique de tonte systématique par laquelle la tondeuse tond la pelouse de manière systématique, comme le fait un être humain avec une tondeuse classique, soit en suivant un parcours prédéfini, par exemple par enfouissement d'un fil de guidage dans le sol, soit en utilisant un système de cartographie et/ou de repérage au moyen de balises;
- une technique de parcours aléatoire par laquelle la tondeuse robotique se déplace constamment de manière aléatoire sur la surface à tondre sans chercher un parcours déterminé.

L'avantage de cette dernière technique est qu'elle peut être rendue naturellement auto-adaptative ce qui donne une très grande robustesse au système. Elle nécessite par contre un grand nombre de passages pour obtenir une couverture complète de la surface (3 passages garantissant 97% de couverture). Ceci ne pose guère de problème dans le cas d'une technique continue (voir brevet européen 0 550 473 relatif à une tondeuse robotique éventuellement alimentée par l'énergie solaire), mais constitue un handicap si l'on veut tondre occasionnellement et rapidement une pelouse avec une tondeuse robotique sans système de guidage prédéterminé.

Tous les éléments mentionnés mais non décrits en détail dans la présente description sont analogues ou identiques à ceux décrits dans le brevet européen 0 550 473 susmentionné, intégré par référence dans la présente description.

Selon un aspect préféré de l'invention on propose un engin de tonte robotique à plusieurs têtes de coupe.

Plus particulièrement l'engin de tonte présente les éléments suivants, pris isolément ou en combinaison quelconque:
- un châssis mobile comportant au moins une roue motrice et à sa face inférieure au moins deux têtes de coupe juxtaposées, de préférence associées chacune à un moteur, de préférence électrique, indépendant
- un système électronique de contrôle
- un ordinateur de bord
- une unité d'alimentation électrique
- un moyen de mesure de l'effort fourni par chaque tête de coupe, ladite mesure étant transmise à l'ordinateur de bord
- un algorithme mis en mémoire permettant l'interaction du système d'avancement de l'engin, les mesures d'effort précitées et l'ordinateur de bord, moyen susceptible de permettre par exemple la recherche des surfaces d'herbe à couper;
- un moyen de détection des limites de la surface de tonte par mesure d'un champ magnétique ou de la variation d'un champ magnétique émis ou provoqué par un fil, posé ou enterré, localisé auxdites limites, et éventuellement
- un moyen de détection des obstacles par l'analyse des mouvements relatifs d'un plateau supérieur de l'engin élastiquement solidaire de son châssis tel que décrit dans le brevet EP 0 550 473
- un dispositif anti-vol basé sur la mesure de l'éloignement au sol et/ou sur un code propre de l'utilisateur.

Selon un aspect préféré de l'invention on prévoit donc l'adoption d'une machine à plusieurs têtes de coupe, de préférence identiques et adoptant un système de guidage selon l'invention. On peut prévoir ainsi deux, trois, quatre, cinq ou plus de cinq têtes de coupes, p.e. huit têtes de coupe, installées sur un même châssis de tondeuse. Selon un mode de réalisation actuellement concrétisé, on prévoit cinq têtes de coupe. Les têtes de coupe sont situées de préférence à l'avant du châssis, qui peut mesurer p.e. de 60 cm à 2 m de large, leurs emplacements étant au moins décalés l'un par rapport à l'autre sur la largeur du châssis (sens perpendiculaire au déplacement). La puissance associée à chaque tête de coupe est généralement située entre 10 et 90 watts, de préférence entre 15 et 60 watts, plus préférentiellement entre 20 et 50 watts. A titre d'exemple, le diamètre d'une tête de coupe peut varier de 10 à 50 cm, un diamètre d'environ 20 cm s'étant avéré avantageux.

La tondeuse robotique à plusieurs têtes de coupe se compose d'un châssis entraîné par deux roues motrices, semblable à celui décrit dans le brevet européen 0 550 473 susmentionné. Les roues motrices seront cependant avantageusement de diamètre sensiblement supérieur, p.e. de 2 à 4 fois supérieur, aux autres roues. A l'avant de la machine sont montées plusieurs têtes de coupe indépendantes. Selon un mode de réalisation actuellement préféré chacune des têtes de coupe est actionnée par son propre moteur électrique.

Ces têtes de coupe sont montées de préférence de manière souple de façon à ce que les irrégularités du sol puissent soulever chaque tête de coupe de manière indépendante. Lorsque pareil soulèvement se produit, l'effort de coupe de la tête correspondante pourrait momentanément ne plus être pris en compte par l'ordinateur (découplage du paramètre).

Les têtes de coupes peuvent être du type décrits dans la demande de brevet PCT WO 96/242432.

Les moteurs de chaque tête peuvent être commandés indépendamment et la mesure de couple de chaque moteur est communiquée à l'ordinateur de bord.

Selon un mode de réalisation de l'invention, l'effort de coupe de chaque tête est constamment analysé (p.e. plusieurs centaines de fois par seconde), de manière connue, par l'ordinateur de la tondeuse. Lorsque la machine recouvre partiellement une zone tondue et une zone non tondue, le résultat de l'analyse des efforts sur chaque tête de coupe permet à l'ordinateur de situer la machine par rapport à la limite des deux zones et de se positionner en conséquence.

L'ordinateur de bord peut ainsi contrôler le parcours de la tondeuse de manière à lui faire suivre approximativement la démarcation entre les deux zones, résultant par exemple de la trace laissée par un passage précédent de la tondeuse robotique.

Pour tondre une surface déterminée, l'engin peut être placé et activé à n'importe quel endroit de cette surface. Le parcours peut s'effectuer d'abord de manière aléatoire jusqu'à ce que l'ordinateur décèle une démarcation de zone tondue-zone non tondue et active l'algorithme susmentionné. La vitesse normale de progression de l'engin peut varier mais est avantageusement d'environ 1 m/sec (p.e. 2 à 5 km/h).

Alternativement, lorsque le périmètre de la zone à tondre est défini par un fil, dans lequel par exemple circule un courant de basse fréquence tel que décrit dans le brevet EP-A-0 550 473 susmentionné, la technique susmentionnée de guidage basée sur ladite démarcation peut être combinée à une technique associée à un démarrage systématique du processus de tonte le long du fil périphérique comme décrit ci-après. Selon un autre aspect de l'invention, chaque technique peut d'ailleurs également s'utiliser indépendamment.

Selon cette seconde technique, en début de tonte la machine (à une ou plusieurs têtes de coupe) est positionnée le long du fil périphérique. Après le démarrage, l'ordinateur de bord mesure périodiquement, de manière connue, l'amplitude du signal émis par le fil périphérique. Cette mesure permet à l'ordinateur de bord de connaître la distance le séparant du fil et donc de contrôler la direction de la machine de manière à la garder à une distance fixe du fil.

Si la longueur du fil a été préalablement introduite dans la mémoire de l'ordinateur de bord, celui-ci peut déterminer avec une précision raisonnable le moment ou un tour complet a été effectué par la tondeuse le long de ce fil. La tondeuse peut alors s'éloigner du fil d'une distance égale à la largeur de coupe de manière à pouvoir effectuer une nouvelle boucle à une distance du fil augmentée de la largeur de coupe. L'opération peut ainsi se répéter en augmentant chaque foie la distance entre la tondeuse et le fil périphérique, idéalement jusqu'à arriver au centre de la zone à tondre.

Selon une variante de réalisation, il n'est pas nécessaire d'introduire dans l'ordinateur la longueur du fil susmentionné. La longueur peut en effet être déterminée par l'ordinateur de bord en intégrant les différences de vitesse entre les roues motrices de la machine (changements de direction) , jusqu'à ce que le changement cumulé atteigne ou dépasse 360 °. Dans ce but, le système peut également avantageusement intégrer un compas magnétique ou inertiel.

On comprendra que ce procédé selon l'invention, basé sur un fil situé aux limites de la surface à tondre peut être appliqué à toutes tondeuses robotiques autonomes, y compris celles ne présentant qu'une seule tête de coupe.

Cependant, dans certaines circonstances, ce procédé basé sur un fil situé aux limites de la surface à tondre présente deux limitations :
- plus la machine s'éloigne du fil, plus le signal diminue et plus il est difficile d'obtenir un positionnement précis par rapport à ce fil,
- par ailleurs, la variation du champ magnétique n'est pas uniforme en tout point du parcours, elle est plus rapide par exemple dans les angles.

On peut alors avantageusement recourir à une combinaison des deux techniques susmentionnées : lorsque la précision du positionnement devient insuffisante, la tondeuse robotique à têtes multiples selon l'invention peut ajuster sa trajectoire, grâce à l'analyse des différents efforts de coupe des têtes de coupe.

Finalement arrivé à une portion centrale du terrain, où le signal du fil est très faible et le gradient pratiquement nul, la tondeuse robotique peut fonctionner alors uniquement, si elle présente plusieurs têtes, sur un mode basé sur l'analyse des efforts de coupe de chaque tête, et/ou basé sur une trajectoire aléatoire si aucune limite précise "zone tondue-zone non tondue" n'est détectée. Cette dernière possibilité peut s'appliquer pour une tondeuse à une seule tête de coupe.

Alternativement, dans cette portion centrale, la tondeuse robotique, à une ou plusieurs têtes, peut adopter un système de tonte systématique, p.e. soit en spirale (voir brevet EP 550473) soit en une tonte de va et vient.

Cette dernière variante consiste en un mouvement de va et vient de la tondeuse, la tondeuse se déplacant en ligne droite, éventuellement guidé à l'aide des données d'un compas, jusqu'à ce que le signal du fil périphérique soit supérieure à une valeur de consigne, auquel cas la tondeuse fait demi-tour avec un décalage de sa trace d'une largeur de coupe pour ainsi approcher l'autre extrémité de la zone à faible signal et de nouveau faire demi-tour avec décalage, p.e. avec un décalage correspondant à ou inférieure à une largeur de coupe.

Les tondeuses selon l'invention peuvent être alimentées par une ou des batteries rechargeables, la recharge étant effectuée selon des techniques connues par exemple en prévoyant dans l'algorithme de déplacement, un retour périodique de l'engin vers une station de recharge, de préférence à induction, telle que décrite dans le brevet européen 0 744 093.

Selon un autre aspect de l'invention, on peut également prévoir, dans la tondeuse robotique, une source d'énergie constituée par un générateur à moteur thermique, fonctionnant avec un carburant classique, de faible puissance alimentant l'ensemble robotique par l'intermédiaire d'un régulateur. De préférence la génératrice est de type triphasée basse tension, tournant à un régime stable mais supérieur à celui des groupes électrogènes traditionnels et alimentant le système via un pont redresseur. Ce type de génératrice est commercialement disponible par exemple pour le camping ou installation dans des voiliers.

A titre d'exemple, le moteur peut être un moteur 2 temps de 35 cm3 entraînant un générateur triphasé. Le moteur peut tourner à 3.000 ou 4.500 tours minutes générant ainsi jusqu'à 200 ou 450 Watt respectivement. Le générateur thermique peut ainsi être dérivé d'un générateur Honda EX 500 muni d'un moteur GE 35, l'ensemble étant modifié en associant un régulateur 24 V 10 A.

Cette technique permet la réalisation d'un ensemble très compact et léger, produisant de l'électricité de manière flexible, avec une autonomie supérieure à celle possible en ayant recours à une batterie rechargeable. On comprendra que selon un aspect de l'invention, pareil type d'alimentation énergétique peut être adapté à tout robots autonomea mobiles.

Selon encore un autre aspect de l'invention, la tondeuse peut être munie d'une batterie rechargeable associée au générateur thermique susmentionné apte ou non à délivrer l'énergie électrique directement ou par l'intermédiaire de la batterie rechargeable qui y est connectée.

Selon encore un autre aspect de l'invention, la tondeuse peut être munie d'un détecteur à ultra-son, du type sonar, dont les données sont transmises à l'ordinateur de bord pour permettre un ralentissement de l'engin à l'approche d'un obstacle. L'obstacle lui-même étant détecté par le déplacement relatif d'un plateau et du châssis comme déjà décrit.

La fig. 1 est une vue schématique en plan d'un exemple d'une tondeuse à gazon selon l'invention.

La fig. 2 est une vue schématique en élévation de la tondeuse de la fig. 1.

La fig. 3 est une vue en perspective de la partie mécanique d'une autre tondeuse robotique selon l'invention.

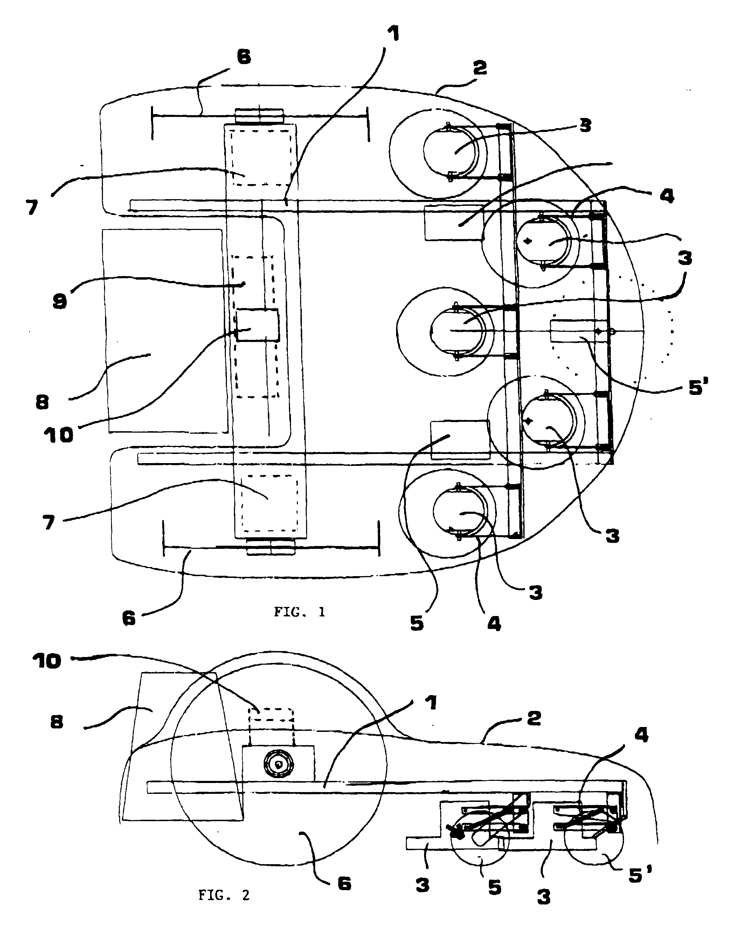

On reconnaît dans la fig. 1 un châssis poutre 1, recouvert par un capot 2, p.e. en polycarbonate ou polyester. Le châssis poutre est mécaniquement relié à l'avant à cinq têtea de coupes 3 identiques localisées sur deux lignes et décalées par rapport à la perpendiculaire au sens de déplacement, de façon à pouvoir recouvrir une partie substantielle de la largeur de la tondeuse. On distingue trois roues libres 5 localisées en triangle à l'avant, la roue libre 5' la plus avancée étant une roue folle. On distingue aussi des moyens d'attaches 4 souples des têtes, et deux roues motrices 6 entraînées par des moteurs électriques 7. Ces roues motrices seront en général avantageusement de grand diamètre afin d'éviter tout battement du châssis en mouvement. Le générateur est situé en 8, l'ordinateur en 9 et le détecteur à ultra-son optionnel en 10. L'engin a une largeur de l'ordre p.e. de 1 mètre.

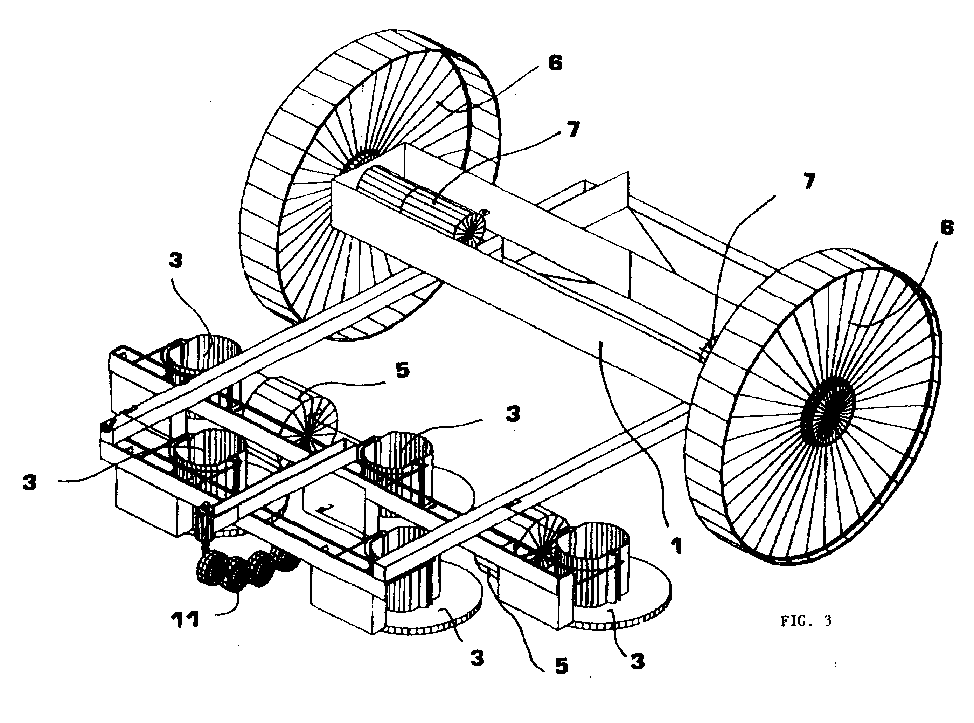

Dans la fig. 3 on distingue la plupart des éléments susmentionnés. Le plateau 2 n'est pas représenté. La roue folle de la fig. 1 a été remplacée par un élément en arc de cercle pouvant pivoter comme une roue folle, arc de rayon plus important et supportant un ensemble de roulettes 11. Cette configuration s'est avérée avantageuse pour éviter un tressautement trop important de l'ensemble. Les deux autres roues libres 5 se présentent sous la forme de courts rouleaux.

## Revendications

1. Procédé de fonctionnement d'une tondeuse à gazon robotique **caractérisé en ce que** :
- la tondeuse est positionnée le long d'un fil délimitant la périphérie de la surface à tondre,
- un ordinateur de bord (9) reçoit périodiquement la mesure de l'amplitude d'un signal émis par le fil périphérique,
- l'ordinateur envoie au système de contrôle les commandes pour faire évoluer la tondeuse à une distance constante dudit fil périphérique,
- l'ordinateur évalue, sur la base de mesure de la distance, éventuellement associée à une mesure des changements de direction, le moment ou un tour complet a été effectué par la tondeuse le long du fil,
- l'ordinateur (9) commande alors un positionnement de la tondeuse à une distance dudit fil supérieure de la précédente, la différence étant égale ou inférieure à la largeur de coupe.

2. Procédé selon la revendication 1 **caractérisé en ce que**, - lorsque le signal émis par le fil est d'une intensité inférieure à une valeur de consigne-l'ordinateur (9) applique un algorithme basé soit sur une trajectoire aléatoire soit une tonte systématique en spirale ou en va et vient, le changement de direction dans ce dernier cas étant commandé par le niveau du signal émis par ledit fil.

3. Engin de tonte robotique comportant un ordinateur de bord (9) apte à agir sur un système électronique de contrôle de l'avancement de l'engin, **caractérisé en ce que** l'ordinateur (9) est programmé pour l'application du procédé selon les revendications 1 ou 2.

4. Engin de tonte robotique selon la revendication 3 **caractérisé en ce qu'**il comporte au moins deux têtes de coupe (3).

5. Engin de tonte robotique selon la revendication 4 **caractérisé en ce que** les deux têtes de coupe (3) sont entraînées chacune par un moteur indépendant (7).

6. Engin selon la revendication 4 ou 5 comprenant en outre un moyen de mesure de l'effort de coupe de chaque tête de coupe (3), ladite mesure pouvant être transmise indépendamment à l'ordinateur de bord (9) apte à agir sur le système électronique de contrôle de l'avancement de l'engin.

7. Engin selon la revendication 3 **caractérisé en ce qu'**il est programmé en outre pour appliquer un procédé de tonte, -lorsque le signal émis par le fil est d'une intensité inférieure à une valeur de consigne -, basé sur une trajectoire aléatoire combiné à des mesures de l'effort enregistré au niveau d'au moins deux têtes de coupe (3).

8. Engin selon les revendications 3 à 7 dans lequel les moteurs (7) sont des moteurs électriques.

9. Engin selon les revendications 3 à 8 comprenant un moyen de détection des obstacles par l'analyse des mouvements relatifs d'un plateau supérieur (2) élastiquement solidaire de son châssis (1).

10. Engin selon n'importe laquelle des revendications 3 à 9 comprenant un moyen de mesure d'un champ magnétique ou de la variation d'un champ magnétique émis ou provoqué par un fil, posé ou enterré, localisé auxdites limites.

11. Engin selon n'importe laquelle des revendications 3 à 10 **caractérisé en ce que** l'unité d'alimentation électrique (8) comprend un générateur à moteur thermique.

12. Engin selon la revendication 4 dans lequel les roues motrices (6) sont de diamètre deux à quatre fois supérieur aux autres roues (5).

13. Engin selon n'importe laquelle des revendications 3 à 12 comprenant un compas magnétique ou inertiel.

14. Engin selon n'importe laquelle des revendications 4 à 13 dans lequel les têtes de coupe (3) sont montées de manière souple de façon à ce que les irrégularités du sol puissent soulever chaque tête de coupe (3) de manière indépendante.

15. Engin de tonte robotique selon n'importe laquelle des revendications 4 à 14 comprenant les éléments suivants :
- un châssis (1) mobile comportant au moins une roue motrice et à sa face inférieure au moins deux têtes de coupe juxtaposées, entraînées chacune par un moteur électrique
- un système électronique de contrôle de l'avancement de l'engin
- un ordinateur de bord (9), apte à agir sur un système électronique de contrôle de l'avancement de l'engin
- une unité d'alimentation électrique (8)
- un moyen de détection des limites de la surface de tonte
- un algorithme mis en mémoire permettant l'interaction du système d'avancement de l'engin et l'ordinateur de bord (9)
- un compas magnétique ou inertiel.

## Patentansprüche

1. Betriebsweise eines automatischen Rasenmähers, **dadurch gekennzeichnet, daß**:
- der Mäher entlang eines Drahtes positioniert wird, der den Bereich der zu mähenden Oberfläche abgrenzt,
- ein Bordrechner (9) regelmäßig eine Messung der Amplitude eines Signals erhält, das vom Begrenzungsdraht ausgesandt wurde,
- der Rechner an das Kontrollsystem Befehle sendet, um den Mäher sich in einem konstanten Abstand zum Begrenzungsdraht bewegen zu lassen,
- der Rechner auf Grund der Messung des Abstandes, eventuell verbunden mit einer Messung der Richtungsänderungen, den Zeitpunkt abschätzt, an dem eine vollständige Umrundung durch den Mäher entlang des Drahtes durchgeführt worden ist,
- der Rechner (9) dann eine Positionierung des Mähers in einem Abstand zum genannten Draht einleitet, der größer ist als der vorherige, wobei der Unterschied jedoch geringer als die Schnittbreite ist.

2. Verfahren gemäß Anspruch 1, **dadurch gekennzeichnet, daß** - sobald das vom Draht erzeugte Signal eine Intensität aufweist, die unter einem vorgegebenen Wert liegt - der Rechner (9) entweder einen Algorithmus anwendet, der auf einer Zufallsbahn basiert, oder ein systematisches Mähen in Form einer Spirale oder einer Hin- und Herbewegung veranlaßt, wobei in diesem letzten Fall die Richtungsänderung durch die Höhe des Signals gesteuert wird, das von dem besagten Draht erzeugt wurde.

3. Automatische Mähvorrichtung mit einem Bordrechner (9), der geeignet ist, auf ein elektronisches System zur Kontrolle des Antriebes der Vorrichtung einzuwirken, **dadurch gekennzeichnet, daß** der Rechner (9) für die Anwendung der Verfahrensweise gemäß Anspruch 1 oder 2 programmiert ist.

4. Automatische Mähvorrichtung gemäß Anspruch 3, **dadurch gekennzeichnet, daß** sie wenigstens zwei Schneidköpfe (3) aufweist.

5. Automatische Mähvorrichtung gemäß Anspruch 4, **dadurch gekennzeichnet, daß** die zwei Schneidköpfe (3) jeder durch einen unabhängigen Motor (7) angetrieben werden.

6. Vorrichtung gemäß Anspruch 4 oder 5, **dadurch gekennzeichnet, daß** sie außerdem Mittel zur Messung der Schnittkraft jedes Schneidkopfes (3) umfaßt, wobei die besagte Messung unabhängig an den Bordrechner (9) übermittelt werden kann, der geeignet ist, auf das elektronische System zur Kontrolle des Antriebes der Vorrichtung einzuwirken.

7. Vorrichtung gemäß Anspruch 3, **dadurch gekennzeichnet, daß** sie außerdem derart programmiert ist, daß sie eine Vorgehensweise beim Mähen anwendet, die - wenn das vom Draht erzeugte Signal eine Intensität unterhalb eines vorgegebenen Wertes aufweist - auf einer Zufallsbahn basiert, kombiniert mit Messungen des Kraftaufwandes, der an wenigstens zwei Schneidköpfen (3) ermittelt wurde.

8. Vorrichtung gemäß Anspruch 3 bis 7, **dadurch gekennzeichnet, daß** die Motoren (7) Elektromotoren sind.

9. Vorrichtung gemäß Anspruch 3 bis 8, **dadurch gekennzeichnet, daß** Mittel zur Feststellung von Hindernissen durch die Analyse der Relativbewegungen einer oberen Platte (2), die elastisch an einem Rahmen (1) gehaltert ist, vorgesehen sind.

10. Vorrichtung gemäß einem der Ansprüche 3 bis 9, **dadurch gekennzeichnet, daß** sie Mittel zur Messung eines Magnetfeldes oder der Veränderung eines Magnetfeldes umfaßt, das von einem aufgespannten oder vergrabenen Draht erzeugt wird und das die Grenzen markiert.

11. Vorrichtung gemäß einem der Ansprüche 3 bis 10, **dadurch gekennzeichnet, daß** die Einheit zur Stromversorgung (8) einen Generator mit Verbrennungsmotor umfaßt.

12. Vorrichtung gemäß Anspruch 4, **dadurch gekennzeichnet, daß** die Antriebsräder (6) einen zwei bis viermal größeren Durchmesser aufweisen als die übrigen Räder (5).

13. Vorrichtung gemäß einem der Ansprüche 3 bis 12, **dadurch gekennzeichnet, daß** sie einen magnetischen oder Trägheitskompaß umfaßt.

14. Vorrichtung gemäß einem der Ansprüche 4 bis 13, **dadurch gekennzeichnet, daß** die Schneidköpfe (3) derart gelenkig gehaltert sind, daß Unregelmäßigkeiten des Bodens jeden Schneidkopf (3) unabhängig aufzurichten vermögen.

15. Automatische Mähvorrichtung gemäß einem der Ansprüche 4 bis 14, **dadurch gekennzeichnet, daß** sie die folgenden Elemente umfaßt:
- einen beweglichen Rahmen (1), der wenigstens ein Antriebsrad umfaßt und an dessen Unterseite wenigstens zwei nebeneinander liegende Schneidköpfe angeordnet sind, die jeder durch einen Elektromotor antreibbar sind
- ein elektronisches System zur Kontrolle des Antriebes der Vorrichtung
- einen Bordrechner (9), der geeignet ist, auf ein elektronisches System zur Kontrolle des Antriebes der Vorrichtung einzuwirken
- eine Einheit zur Stromversorgung (8)
- ein Mittel zur Detektierung der Grenzen der zu mähenden Fläche
- einen gespeicherten Algorithmus, der eine Wechselwirkung zwischen dem Antriebssystem der Vorrichtung und dem Bordrechner (9) ermöglicht einen magnetischen oder Trägheitskompaß.

## Claims

1. Operating method for a robotic lawn mower **characterized in that**:
- the mower is positioned along a wire delimiting the periphery of the surface area to be mowed,
- an on-board computer (9) periodically receives the measurement of the amplitude of a signal emitted by the peripheral wire
- the computer sends the commands to the control system in order to make the mower advance at a constant distance from the aforesaid peripheral wire
- the computer evaluates, on the basis of the measurement of the distance, possibly combined with a measurement of the changes of direction, the time when a complete round has been effected by the mower along the wire
- the computer (9) then controls a positioning of the mower at a distance from the aforesaid wire greater than the previous one, the difference being equal to or less than the cutting width.

2. Method according to claim 1 **characterized in that**
- when the signal emitted by the wire is of an intensity of less than a reference value
- the computer (9) applies an algorithm based either on a random path or a spiral or back and forth systematic mowing, the change of direction in this latter case being controlled by the level of the signal emitted by the aforesaid wire.

3. Robotic mowing device comprising an on-board (9) computer able to act on a electronic advancement control system of the device, said computer (9) being programmed for applying the process of claims 1 or 2.

4. Robotic mowing device according to claim 3 **characterised in that** it comprises at least two cutting heads (3).

5. Robotic mowing device according to claim 4 **characterised in that** the two cutting heads are each driven by an independent motor (7).

6. Device according to any of the claims 4 or 5 comprising furthermore a means for measuring the force provided by each cutting head (3), the aforesaid measurement being transmitted independently to the on-board computer (9) able to act on the electronic advancement control system.

7. Device according to claim 3 further **characterised in that** it is programmed for applying a mowing process - when the signal emitted by the wire is of an intensity of less than a reference value - based on a random path combined with the measurements of the force registered in at least two cutting heads (3).

8. Device according to claims 3 to 7 wherein the motors (7) are electrical motors.

9. Device according to claims 3 to 8 comprising a means for detecting obstacles by analysis of relative movements of an upper plate (2) of the device elastically integral to its chassis (1).

10. Device according to any of the claims 3 to 9 comprising a means for measuring a magnetic field or the variation of a magnetic field emitted or caused by a laid-down or buried wire located at the aforesaid boundaries.

11. Device according to any of the claims 3 to 10 **characterized in that** the electric power supply unit (8) comprises a heat engine generator.

12. Device according to claim 4 wherein the driving wheels (6) have a diameter from 2 to 4 times greater than the other wheels (5).

13. Device according to any of the claims 3 to 12 integrating a magnetic or inertial compass.

14. Device according to any of the claims 3 to 13 wherein the cutting heads (3) are flexibly mounted so that the ground irregularities can lift each cutting head (3) independently.

15. Robotic lawn mowing device according to any of the claims 4 to 14 comprising the following elements :
- a mobile chassis (1) comprising at least one driving wheel and on its lower side at least two juxtaposed cutting heads, each driven by a electric motor
- a device advancement electronic control system
- an on-board computer (9) able to act on a device advancement electronic control system
- an electric power supply unit (8)
- a means for detecting the boundaries of the mowing surface area
- an algorithm stored in memory enabling the interaction of the advancement system of the device and the on-board computer (9)
- a magnetic or inertial compass.
